# EUROPÄISCHE PATENTANMELDUNG

(11) **EP 3 407 147 A1**
(43) Veröffentlichungstag der Anmeldung: **28.11.2018**
(21) Anmeldenummer: 17172848.8
(22) Anmeldetag: 24.05.2017
(51) Int. Cl.: G05B 19/042

(54) **VERFAHREN ZUM BETRIEB EINER ZYKLISCH ARBEITENDEN AUTOMATISIERUNGSSTEUERUNG, AUTOMATISIERUNGSSTEUERUNG UND ENGINEERINGSYSTEM**

(71) Anmelder: Siemens Aktiengesellschaft, 80333 München (DE)
(72) Erfinder: Götz, Thomas, 92546 Schmidgaden (DE); Kob, Peter, 90562 Heroldsberg (DE)

(57) **Zusammenfassung**

Verfahren zum Betrieb einer zyklisch arbeitenden Automatisierungssteuerung, Automatisierungssteuerung und Engineeringsystem

Die Erfindung bezieht sich auf ein Verfahren zum Betrieb einer zyklisch arbeitenden Automatisierungssteuerung (10), wobei innerhalb einer Zyklus-Zeit (ZZ) der Automatisierungssteuerung (10) folgende Schritte ausgeführt werden:
1. Einlesen von Eingangsdaten (ED) von einer Eingangs-Peripherie (Ein),
2. Speichern der Eingangsdaten (ED) in einen Prozessabbild-Speicher für Eingänge (PAE),
3. Starten eines Anwenderprogramms (AP), wobei eine Mehrzahl von Programmanweisungen auf der Grundlage der im Prozessabbild-Speicher für Eingänge (PAE) gespeicherten Eingangsdaten (ED) Ausgangsdaten (AD) erzeugen,
4. Speichern der Ausgangsdaten (AD) in einen Prozessabbild-Speicher für Ausgänge (PAA) nach Ausführung der letzten Programmanweisung,
5. Schreiben der Ausgangsdaten (AD) aus dem Prozessabbild-Speicher für Ausgänge (PAA) zu einer Ausgangs-Peripherie (Aus),
wobei eine Datensicherung von remanenten Daten (RD) innerhalb eines Zeitfensters (ZF) durchgeführt wird, welches sich mit dem Ende des 3. Schrittes öffnet und mit Beginn des 1. Schrittes wieder schließt.

## Beschreibung

Verfahren zum Betrieb einer zyklisch arbeitenden Automatisierungssteuerung, Automatisierungssteuerung und Engineeringsystem

Die Erfindung betrifft ein Verfahren zum Betrieb einer zyklisch arbeitenden Automatisierungssteuerung, wobei innerhalb einer Zyklus-Zeit der Automatisierungssteuerung folgende Schritte ausgeführt werden:
1. Einlesen von Eingangsdaten von einer Eingangs-Peripherie,
2. Speichern der Eingangsdaten in einen Prozessabbild-Speicher für Eingänge,
3. Starten eines Anwenderprogramms, wobei eine Mehrzahl von Programmanweisungen auf der Grundlage der im Prozessabbild-Speicher für Eingänge gespeicherten Eingangsdaten Ausgangsdaten erzeugen,
4. Speichern der Ausgangsdaten in einen Prozessabbild-Speicher für Ausgänge nach Ausführung der letzten Programmanweisung,
5. Schreiben der Ausgangsdaten aus dem Prozessabbild-Speicher für Ausgänge zu einer Ausgangs-Peripherie,
wobei für die zyklische Bearbeitung nach Schritt 5. wieder mit Schritt 1. angefangen wird.

Desweiteren betrifft die Erfindung eine Automatisierungssteuerung ausgestaltet innerhalb einer Zyklus-Zeit Programmanweisungen abzuarbeiten, umfassend ein Betriebssystem, ein Mittel zum Einlesen von Eingangsdaten von einer Eingangs-Peripherie, ein Mittel zum Speichern der Eingangsdaten in einen Prozessabbild-Speicher für Eingänge, ein Mittel zum Ausführen eines Anwenderprogramms, wobei eine Mehrzahl von Programmanweisungen auf der Grundlage der im Prozessabbild-Speicher für Eingänge gespeicherten Eingangsdaten Ausgangsdaten erzeugen, ein Mittel zum Speichern der Ausgangsdaten in einen Prozessabbild-Speicher für Ausgänge, ein Mittel zum Schreiben der Ausgangsdaten aus dem Prozessabbild-Speicher für Ausgänge zu einer Ausgangs-Peripherie.

Auch betrifft die Erfindung ein Engineering-System zum Konfigurieren der vorgenannten Automatisierungssteuerung.

Bei Automatisierungsgeräten für industrielle Steuerungsprozesse ist es wünschenswert eine Datensicherung durchzuführen. Eine derartige Datensicherung, insbesondere im Hinblick auf remanente Daten, erfolgt bisher durch einen Anwender. Dazu musste der Anwender das Automatisierungsgerät bzw. die Automatisierungssteuerung in einen Stopp-Zustand bringen, damit die zu sicherenden remanenten Daten (z.B. Datenbaustein oder Merker, Timer, Zähler, Zeitglieder) nicht mehr vom Prozess beeinflusst werden. In dem Stopp-Zustand können sowohl das Programm als auch alle remanenten Werte konsistent gesichert werden. Im Sinne der Erfindung ist unter remanenten Daten zu verstehen:
Remanente Daten sind Daten die bei einem Wiedereinschalten der Automatisierungssteuerung wieder zur Verfügung stehen, trotzdem das die Automatisierungssteuerung in der Zwischenzeit abgeschaltet wurde. Remanenz ist in der Automatisierungstechnik die Eigenschaft von Operanden, ihren Wert nach Spannungsausfall zu behalten.

Es ist Aufgabe der vorliegenden Erfindung, ein Verfahren für eine Datensicherung der remanenten Daten zur Verfügung zu stellen, bei welchem ein Anwender die Automatisierungssteuerung nicht in den Stopp-Zustand bringen muss.

Für das eingangs genannte Verfahren zum Betrieb einer zyklisch arbeitenden Automatisierungssteuerung wird die Aufgabe dadurch gelöst, dass eine Datensicherung von remanenten Daten innerhalb eines Zeitfensters durchgeführt wird, welches sich mit dem Ende des dritten Schrittes öffnet und mit Beginn des ersten Schrittes wieder schließt. Die Datensicherung kann nun erfolgen, während die Automatisierungssteuerung sich in einem Run-Zustand befindet, es wird nun aber erfindungsgemäß ausgenutzt, dass durch die zyklische Bearbeitung ein Zeitpunkt existiert, der hinsichtlich der Datenkonsistent gewährleistet. Dieser Zeitpunkt ist bestimmt durch das Kopieren eines Prozessabbildes auf die Ausgangsperipherie. Die Datensicherung muss also erfolgen bevor diese Aktion abgeschlossen ist.

Da vorzugsweise nur die remanenten Daten konsistent gesichert werden müssen, ist diese Zeitspanne vergleichsweise kurz, im Hinblick auf die Zykluszeit und wird dem noch eine Gesamt-Zykluszeit nicht nennenswert beeinflussen.

In einer vorteilhaften Weiterbildung des Verfahrens werden die zu sicherenden remanenten Daten in einem Remanenz-Speicher zwischengespeichert und eine Datensicherung auf ein von der Automatisierungssteuerung getrenntes externes Medium jeweils in Bruchteilen von dem gesamten Dateninhalt des Remanenz-Speichers über mehrere Zyklen hinweg jeweils innerhalb des Zeitfensters durchgeführt, damit die Zykluszeit der Automatisierungssteuerung eine maximal vorgegebene Zykluszeit nicht übersteigt. Die Datensicherung der remanenten Daten wird demnach auf mehrere Zyklen verteilt.

Für die eingangs genannte Automatisierungssteuerung wird die Aufgabe dadurch gelöst, dass das Betriebssystem derart ausgestaltet ist, dass gewährleistet ist, dass eine Datensicherung von remanenten Daten innerhalb eines Zeitfensters durchgeführt wird, wobei das Zeitfenster nach Beendigung der letzten Anweisung im Anwenderprogramm geöffnet ist und mit Beginn des Einlesens der Eingangsdaten geschlossen ist. Durch die Eigenschaften einer zyklusorientiert arbeitenden Automatisierungssteuerung gibt es genau einen volatilen Bereich, der aber wiederum konsistent gesichert werden muss und einen Bereich der nicht verändert wird, beispielsweise der Programmcode.

Eine weitere Ausgestaltung der Automatisierungssteuerung sieht vor, dass Mittel vorhanden sind, welche ausgestaltet sind, die zu sichernden remanenten Daten in einen Remanenz-Speicher zwischen zu speichern und eine Datensicherung auf ein von der Automatisierungssteuerung getrenntes externes Medium jeweils in Bruchteilen von dem gesamten Dateninhalt des Remanenz-Speichers über mehrere Zyklen hinweg jeweils innerhalb des Zeitfensters durchzuführen, damit die Zykluszeit der Automatisierungssteuerung eine maximal vorgegebene Zykluszeit nicht übersteigt.

Hinsichtlich eines Programmcodes und nichtvolatiler Daten, können die Programmcode Daten über einen langen Zeitraum gesichert werden, da sich die Inhalte nicht ändern. Remanente Daten hingegen werden konsistent in einen Schritt gesichert oder in einem separaten Bereich geschrieben der dann später gesichert werden muss. Bei einer erneuten Datensicherung müssen nur die remanenten Daten neu gesichert werden, da sich die anderen Daten nicht geändert haben. Erst nach einem erneuten Download der Software auf die Automatisierungssteuerung müssten auch die Programmcode Daten erneut gesichert werden.

Bezogen auf ein Engineering-System wird die Aufgabe dadurch gelöst, dass der Anwender nun in seinem Engineering-System Mittel zum Einstellen der Datensicherung mit folgenden Einstellmöglichkeiten vorfindet:
- Datensicherung an oder aus,
- Manueller- oder automatischer Betrieb,
- Wahl einer Länge des Zeitfensters.

Auch könnte man Zeitpunkte für die Datensicherung festlegen, ähnlich wie eine Zeitschaltuhr, beispielsweise könnten die Daten in der Nachtschicht gesichert werden, wo nicht so viel Prozessbetrieb herrscht. Auch eine Vorgabe der Datenhäppchen, sprich eine Vorgabe der Bruchteile von dem gesamten Dateninhalt des Remanenzspeichers ist denkbar.

Die Zeichnung zeigt für das Verfahren, für die Automatisierungssteuerung und für das Engineering-System ein Ausführungsbeispiel. Es zeigt:
- FIG 1: einen Programmablaufplan für das Verfahren zum Betrieb einer zyklisch arbeitenden Automatisierungssteuerung,
- FIG 2: die Schritte einer zyklisch arbeitenden Automatisierungssteuerung nach dem Stand der Technik,
- FIG 3: die Schritte für die Automatisierungssteuerung mit dem erfindungsgemäß eingeführten Zeitfenster für die Datensicherung und
- FIG 4: eine im Hinblick auf die Datensicherung innerhalb eines Zeitfensters angepasste Automatisierungssteuerung mit angeschlossenem Engineering-System.

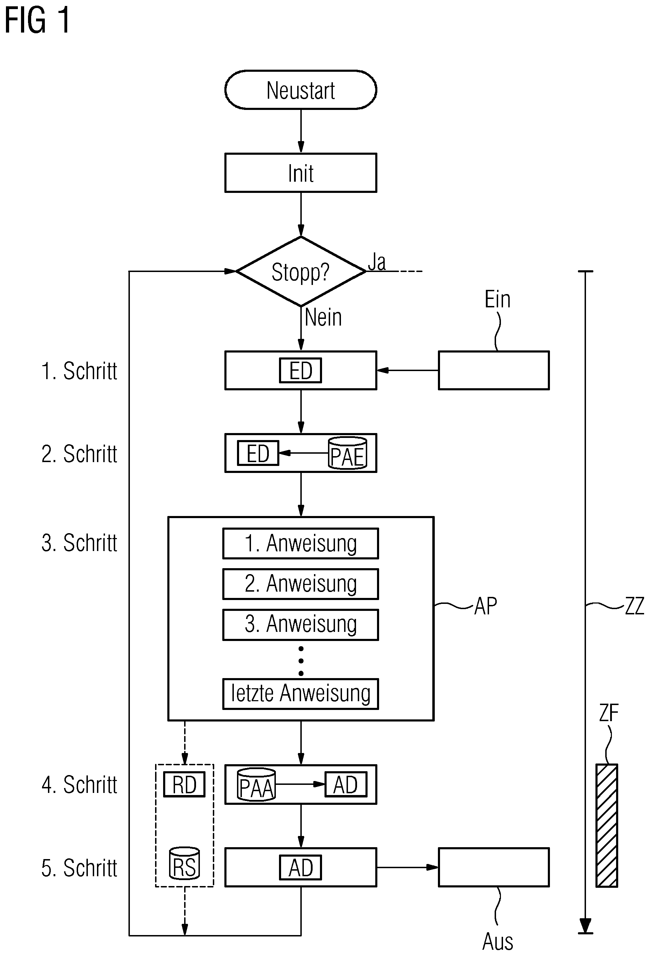

Gemäß FIG 1 ist ein Programmablaufplan für ein Verfahren zum Betrieb einer zyklisch arbeitenden Automatisierungssteuerung 10 dargestellt. Innerhalb einer Zyklus-Zeit ZZ werden in der Automatisierungssteuerung 10 ein erster Schritt: Einlesen von Eingangsdaten ED von einer Eingangs-Peripherie Ein, ein zweiter Schritt: Speichern der Eingangsdaten ED in einem Prozessabbild-Speicher für Eingänge PAE, ein dritter Schritt: Starten eines Anwenderprogramms AP, wobei eine Mehrzahl von Programmanweisungen auf der Grundlage der im Prozessabbild-Speicher für Eingänge PAE gespeicherten Eingangsdaten ED Ausgangsdaten AD erzeugen, ein vierter Schritt: Speichern der Ausgangsdaten AD in einen Prozessabbild-Speicher für Ausgänge PAA nach Ausführung der letzten Programmanweisungen, ein fünfter Schritt: Schreiben der Ausgangsdaten AD aus dem Prozessabbild-Speicher für Ausgänge PAA zu einer Ausgangs-Peripherie Aus durchgeführt. Nach dem fünften Schritt geht es wieder zyklisch mit dem ersten Schritt weiter.

Um zu den zuvor beschriebenen zyklisch arbeitenden Schritten zu gelangen, wird von einem Neustart der Automatisierungssteuerung 10 ausgegangen, an welchen sich eine Initialisierungsphase anschließt. Nach einem Neustart werden in der Regel alle Ausgängen, Zeitglieder, Zähler und Merker auf null gesetzt. Da man eine CPU beispielsweise mit einem Schalter in einen Stopp-Zustand versetzen kann, wird jedesmal vor dem ersten Schritt abgefragt, ob die CPU im Stopp steht oder nicht. Über eine externe Peripherie werden die Eingangsdaten ED nun eingelesen und nach Abarbeitung des Anwenderprogramms AP werden die Ausgangsdaten AD an eine externe Ausgangs-Peripherie bzw. Ausgangs-Peripherie Aus ausgegeben.

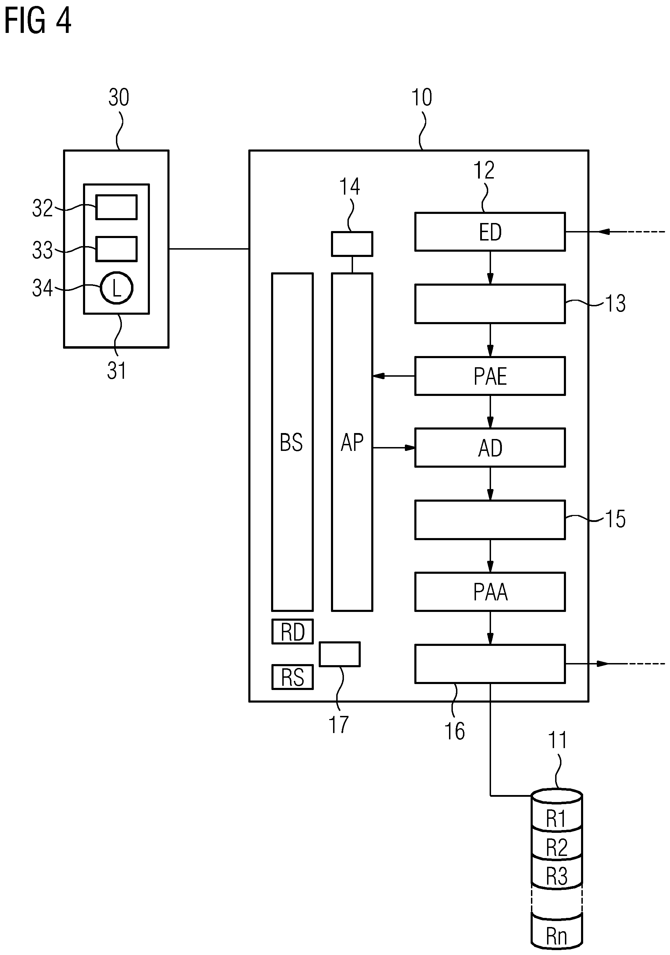

Erfindungsgemäß wird nun eine Datensicherung von remanenten Daten RD innerhalb eines Zeitfensters ZF durchgeführt, welches sich mit dem Ende des dritten Schrittes öffnet und mit Beginn des ersten Schrittes wieder schließt. In dem gestrichelten Kästchen ist dieses Abspeichern innerhalb des Zeitfensters ZF der remanenten Daten RD in einen Remanenz-Speicher RS angedeutet. Dabei ist es sinnvoll, die zu sichernden remanenten Daten RD in dem Remanenz-Speicher RS zwischen zu speichern und eine Datensicherung auf ein von der Automatisierungssteuerung 10 getrenntes Medium 11 (siehe FIG 4) jeweils in Bruchteilen R1,R2,R3,...,Rn von dem gesamten Dateninhalt des Remanenz-Speichers RS über mehrere Zyklen hinweg jeweils innerhalb des Zeitfensters ZF durchzuführen, damit die Zykluszeit ZZ der Automatisierungssteuerung 10 eine maximal vorgegebene Zykluszeit nicht übersteigt.

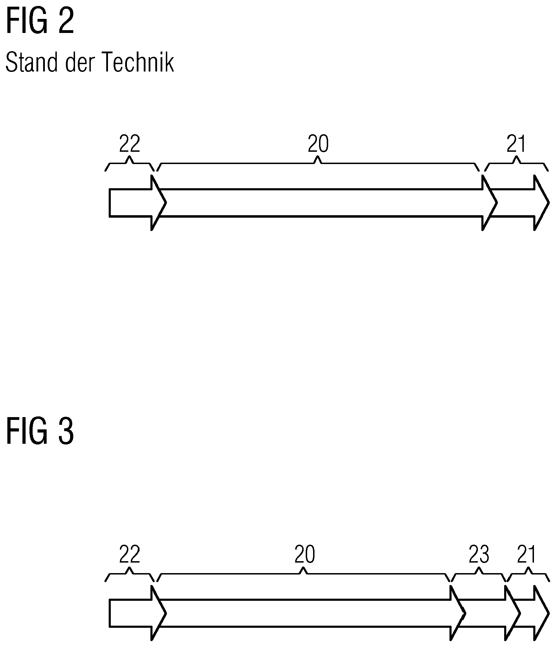

Mit der FIG 2 ist das prinzipielle zyklische Verhalten einer zyklisch arbeitenden Automatisierungssteuerung 10 nach dem Stand der Technik gezeigt. Ein Programmablauf 20 des Anwenderprogramms AP liegt zwischen einem Lesevorgang 22 für die Eingangsdaten ED der Eingangs-Peripherie Ein und einem Schreibvorgang 21 der Ausgangsdaten AD zu der Ausgangs-Peripherie Aus.

Die FIG 3 zeigt das erfindungsgemäße Einfügen eines Sicherungsvorgangs 23 an einer gewissen Stelle und zu einer gewissen Zeit. Im Anschluss an den Programmablauf 20 des Anwenderprogramms AP können remanente Daten mit dem Sicherungsvorgang 23 konsistent abgespeichert werden, da sich in diesem Zeitbereich an den Daten nichts mehr ändert.

Gemäß FIG 4 ist eine Automatisierungssteuerung 10 mit einem angeschlossenen Engineeringsystem 30 dargestellt. Die Automatisierungssteuerung 10 ist ausgestaltet, innerhalb der Zyklus-Zeit ZZ Programmanweisungen in seinem Anwenderprogramm AP abzuarbeiten. Für die interne Organisation weist die Automatisierungssteuerung 10 ein Betriebssystem BS auf. Die Automatisierungssteuerung 10 umfasst ein Mittel 12 zum Einlesen der Eingangsdaten ED von der Eingangs-Peripherie Ein, ein Mittel 13 zum Speichern der Eingangsdaten ED in einem Prozessabbild-Speicher für Eingänge PAE, ein Mittel 14 zum Ausführen eines Anwenderprogramms AP, wobei eine Mehrzahl von Programmanweisungen auf der Grundlage der im Prozessabbild-Speicher für Eingänge PAE gespeicherten Eingangsdaten ED Ausgangsdaten AD erzeugen. Um die erzeugten Ausgangsdaten AD wieder zu einer Ausgangs-Peripherie Aus zu schreiben, umfasst die Automatisierungssteuerung 10 weiterhin ein Mittel 15 zum Speichern der Ausgangsdaten AD in einen Prozessabbild-Speicher für Ausgänge PAA und schließlich ein Mittel 16 zum Schreiben der Ausgangsdaten AD aus dem Prozessabbild-Speicher für Ausgänge PAA zu der Ausgangs-Peripherie Aus.

Nun ist erfindungsgemäß das Betriebssystem BS derart ausgestaltet, dass für eine konsistente Datensicherung RD der remanenten Daten, die Datensicherung der remanenten Daten RD innerhalb eines Zeitfensters ZF durchgeführt wird, wobei das Zeitfenster ZF nach Beendigung der letzten Anweisung im Anwenderprogramm AP geöffnet ist und mit Beginn des Einlesens der Eingangsdaten ED geschlossen ist.

Weiterhin weist die Automatisierungssteuerung ein Mittel 17 auf, welches ausgestaltet ist, die zu sichernden remanenten Daten RD in einen Remanenz-Speicher RS zwischen zu speichern und eine Datensicherung auf ein von der Automatisierungssteuerung 10 getrenntes externes Medium 11 jeweils im Bruchteilen R1,R2,R3,...,Rn von dem gesamten Dateninhalt des Remanenz-Speichers RS über mehrere Zyklen hinweg jeweils innerhalb des Zeitfensters ZF durchzuführen, damit die Zykluszeit der Automatisierungssteuerung 10 eine maximal vorgegebenen Zykluszeiten nicht übersteigt.

Über ein angeschlossenes Engineeringsystem 30 mit welchen man üblicherweise die Automatisierungssteuerung 10 konfiguriert und programmiert kann nun über Mittel 31 zum Einstellen der konsistenten Datensicherung der remanenten Daten RD mit folgenden Einstellmöglichkeiten der Anwender seine Datensicherungsart wählen: Eine Einstellmöglichkeit der Datensicherung 32 "an" oder "aus", eine Einstellmöglichkeit "manueller" oder "automatischer" Betrieb 33 und eine Einstellmöglichkeit für die Wahl einer Länge des Zeitfensters ZF, um die Zykluszeit ZZ anzupassen.

## Patentansprüche

1. Verfahren zum Betrieb einer zyklisch arbeitenden Automatisierungssteuerung (10), wobei innerhalb einer Zyklus-Zeit (ZZ) der Automatisierungssteuerung (10) folgende Schritte ausgeführt werden:
1. Einlesen von Eingangsdaten (ED) von einer Eingangs-Peripherie (Ein),
2. Speichern der Eingangsdaten (ED) in einen Prozessabbild-Speicher für Eingänge (PAE),
3. Starten eines Anwenderprogramms (AP), wobei eine Mehrzahl von Programmanweisungen auf der Grundlage der im Prozessabbild-Speicher für Eingänge (PAE) gespeicherten Eingangsdaten (ED) Ausgangsdaten (AD) erzeugen,
4. Speichern der Ausgangsdaten (AD) in einen Prozessabbild-Speicher für Ausgänge (PAA) nach Ausführung der letzten Programmanweisung,
5. Schreiben der Ausgangsdaten (AD) aus dem Prozessabbild-Speicher für Ausgänge (PAA) zu einer Ausgangs-Peripherie (Aus),
**dadurch gekennzeichnet, dass** eine Datensicherung von remanenten Daten (RD) innerhalb eines Zeitfensters (ZF) durchgeführt wird, welches sich mit dem Ende des 3. Schrittes öffnet und mit Beginn des 1. Schrittes wieder schließt.

2. Verfahren nach Anspruch 1, wobei die zu sichernden remanenten Daten (RD) in einen Remanenz-Speicher (RS) zwischengespeichert werden und eine Datensicherung auf ein von der Automatisierungssteuerung (10) getrenntes externes Medium (11) jeweils in Bruchteilen (R1,R2,R3,..,Rn) von dem gesamten Dateninhalt des Remanenz-Speichers (RS) über mehrere Zyklen hinweg jeweils innerhalb des Zeitfensters (ZF) durchgeführt wird, damit die Zykluszeit(ZZ) der Automatisierungssteuerung (10) eine maximal vorgegebene Zykluszeit nicht übersteigt.

3. Automatisierungssteuerung (10) ausgestaltet innerhalb einer Zyklus-Zeit (ZZ) Programmanweisungen abzuarbeiten, umfassend
- ein Betriebssystem (BS),
- ein Mittel (12) zum Einlesen von Eingangsdaten (ED) von einer Eingangs-Peripherie (Ein),
- ein Mittel (13) zum Speichern der Eingangsdaten (ED) in einen Prozessabbild-Speicher für Eingänge (PAE),
- ein Mittel (14) zum Ausführen eines Anwenderprogramms (AP), wobei eine Mehrzahl von Programmanweisungen auf der Grundlage der im Prozessabbild-Speicher für Eingänge (PAE) gespeicherten Eingangsdaten (ED) Ausgangsdaten (AD) erzeugen,
- ein Mittel (15) zum Speichern der Ausgangsdaten (AD) in einen Prozessabbild-Speicher für Ausgänge (PAA),
- ein Mittel (16) zum Schreiben der Ausgangsdaten (AD) aus dem Prozessabbild-Speicher für Ausgänge (PAA) zu einer Ausgangs-Peripherie (Aus),
**dadurch gekennzeichnet, dass** das Betriebssystem (BS) derart ausgestaltet ist, dass gewährleistet ist, dass eine Datensicherung von remanenten Daten (RD) innerhalb eines Zeitfensters (ZF) durchgeführt wird, wobei das Zeitfenster (ZF) nach Beendigung der letzten Anweisung im Anwenderprogramm (AP) geöffnet ist und mit Beginn des Einlesens der Eingangsdaten (ED) geschlossen ist.

4. Automatisierungssteuerung (10) nach Anspruch 3, weiterhin ausgestaltet mit Mitteln (17), welche ausgestaltet sind die zu sichernden remanenten Daten (RD) in einen Remanenz-Speicher (RS) zwischen zu speichern und eine Datensicherung auf ein von der Automatisierungssteuerung (10) getrenntes externes Medium (11) jeweils in Bruchteilen (R1,R2,R3,..,Rn) von dem gesamten Dateninhalt des Remanenz-Speichers (RS) über mehrere Zyklen hinweg jeweils innerhalb des Zeitfensters (ZF) durchzuführen, damit die Zykluszeit(ZZ) der Automatisierungssteuerung (10) eine maximal vorgegebene Zykluszeit nicht übersteigt.

5. Engineering-System (30) zum Konfigurieren einer Automatisierungssteuerung (10) nach Anspruch 3, mit Mitteln (31) zum Einstellen der Datensicherung mit folgenden Einstellmöglichkeiten:
- Datensicherung (32) an oder aus,
- Manueller- oder automatischer Betrieb (33),
- Wahl einer Länge des Zeitfensters (34).
